# EUROPÄISCHE PATENTSCHRIFT

(11) **EP 1 211 588 B1**
(45) Veröffentlichungstag und Bekanntmachung des Hinweises auf die Patenterteilung: **21.09.2005**
(21) Anmeldenummer: 00126635.2
(22) Anmeldetag: 04.12.2000
(51) Int. Cl.: G06F 1/00

(54) **Verfahren zum Nutzen einer Datenverarbeitungsanlage abhängig von einer Berechtigung, zugehörige Datenverarbeitungsanlage und zugehöriges Programm**
Method for using a data processing system dependent on an authorization, corresponding data processing system and corresponding program
Méthode pour l'usage d'un système de traitement de données à partir d'une autorisation, système de traitement de données correspondant et programme correspondant

(43) Veröffentlichungstag der Anmeldung: 05.06.2002
(73) Patentinhaber: SIEMENS AKTIENGESELLSCHAFT, 80333 München (DE)
(72) Erfinder: Benini, Giovanni, 81379 München (DE)

(56) Entgegenhaltungen:
- EP-A- 0 458 718
- EP-A- 0 647 901
- EP-A- 0 697 662
- DE-A- 19 627 486
- ROSENBERG J ET AL: "PROGRAMMING INTERNET TELEPHONY SERVICES" IEEE NETWORK,IEEE INC. NEW YORK,US, Bd. 13, Nr. 3, Mai 1999 (1999-05), Seiten 42-49, XP000870630 ISSN: 0890-8044

## Beschreibung

Die Erfindung betrifft ein Verfahren, bei dem für mindestens einen Basisnutzer einer Datenverarbeitungsanlage eine Basisberechtigungsstufe bezüglich des Ausführens bestimmter Anweisungen mit Hilfe der Datenverarbeitungsanlage festgelegt wird. Für mindestens einen Vorzugsnutzer der Datenverarbeitungsanlage wird eine Vorzugsberechtigungsstufe festgelegt, die das Ausführen von Anweisungen mit weitergehenden Zugriffsrechten im Vergleich zu den Anweisungen der Basisberechtigungsstufe erlaubt. Abhängig von der Berechtigungsstufe darf ein Nutzer nur die für seine Berechtigungsstufe festgelegten Anweisungen ausführen.

Ein solches Verfahren wird beispielsweise eingesetzt, um einem Systemadministrator der Datenverarbeitungsanlage mehr Zugriffsrechte einzuräumen als den anderen Nutzern. So darf der Systemadministrator Passwörter vergeben und unbeschränkt auf die Speichereinheiten der Datenverarbeitungsanlage zugreifen, z.B. darf er die Speichereinheiten formatieren. Die anderen Nutzer haben nur einen sehr beschränkten Zugriff auf die Speichereinheit, beispielsweise darf jeder Nutzer nur einen für ihn bestimmten Bereich einer Speichereinheit nutzen.

Berechtigungsstufen werden jedoch in vielen Bereichen der Datenverarbeitungstechnik genutzt, beispielsweise im Bankwesen oder beim Programmieren von Telefonleistungsmerkmalen. So wird in dem Artikel "Programming Internet Telefony Services" J. Rosenberg, J. Lennox und H. Schulzrinne, IEEE Network, Mai/Juni 1999, Seite 42 bis Seite 48, erläutert, wie verschiedenen Benutzergruppen verschiedene Berechtigungsstufen zum Programmieren von Telefondiensten eingeräumt werden können. Es wird vorgeschlagen, dass Nutzer mit der Vorzugsberechtigungsstufe eine Netzübergangseinheit über eine Schnittstelle direkt ansteuern können. Diese Schnittstelle wird als CG-Schnittstelle (Common Gateway Interface) bezeichnet. Für Benutzer der Basisberechtigungsstufe soll es möglich sein, ihre Dienste mit einer speziellen Rufbearbeitungssprache durchzuführen. Als Rufbearbeitungssprache wird beispielsweise die Sprache CPL (Call Processing Language) eingesetzt, die sich derzeit in einem Entwurfsstadium (work in progress) befindet, siehe Draft-ietf-iptel-cpl-*.txt unter der WEB-Adresse www.ietf.org.

Es ist Aufgabe der Erfindung, zum Nutzen einer Datenverarbeitungsanlage abhängig von einer Berechtigung ein einfaches Verfahren anzugeben, bei dem insbesondere möglichst wenige Programme einbezogen werden müssen und das insbesondere eine Erweiterung und/oder Änderung der Anweisungen einer Berechtigungsstufe mit geringem Aufwand ermöglicht. Außerdem sollen eine zugehörige Datenverarbeitungsanlage und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass bisher die zulässigen Anweisungen implizit durch die Programmbefehle eines Programms zum Ausführen der Anweisungen festgelegt sind. Eine schnelle Änderung ist bisher nicht möglich, weil an vielen Stellen des Programms Änderungen auszuführen sind. Beim erfindungsgemäßen Verfahren werden zusätzlich zu den eingangs genannten Verfahrensschritten Anweisungen für die Basisberechtigungsstufe in einem Basisdateiabschnitt vermerkt. Anweisungen für die Vorzugsberechtigungsstufe werden in einem Vorzugsdateiabschnitt vermerkt. Vor dem Ausführen der Anweisungen eines Nutzer wird dessen Berechtigungsstufe ermittelt. Abhängig von der Berechtigungsstufe wird der Basisdateiabschnitt oder der Vorzugsdateiabschnitt zum Festlegen der Anweisungen herangezogen, die der Nutzer ausführen darf.

Durch die erfindungsgemäßen Maßnahmen wird erreicht, dass das Festlegen von Berechtigungen gebündelt in verschiedenen Abschnitten einer Datei oder zweier verschiedener Dateien möglich ist. Eine Datei ist eine Menge bestimmter Daten, die unter einem Kennzeichen, z.B. unter einem bestimmten Dateinamen in der Speichereinheit einer Datenverarbeitungsanlage gespeichert wird. Änderungen der Dateiabschnitte sind auf einfache Art auszuführen. Es sind lediglich Dateiabschnitte zu ändern, die im Vergleich zum Programm, das zum Ausführen von Anweisungen benötigt wird, sehr kurz sind. Dadurch ist die zu ändernde Datei sehr übersichtlich und die Änderung lässt sich schnell ausführen. Aufgrund der Übersichtlichkeit treten beim Ändern auch weniger Fehler auf als bisher. Weiterhin entfällt das Neukompilieren eines Programms.

Alternativ zu den Anweisungen wird in dem Basisdateiabschnitt bzw. in dem Vorzugsdateiabschnitt die Syntax von Anweisungen vermerkt. Die Syntax bildet einerseits den Rahmen für zulässige Anweisungen. Meist beruht die Syntax auf einer sogenannten Bachus-Naur-Form oder auf einer erweiterten Bachus-Naur-Form. Umgekehrt legt die Syntax andererseits die Produktionsregeln für fehlerfreie Programme fest. Mit Hilfe der Syntax lässt sich unter Verwendung eines Parser-Programms eine Prüfung der Anweisungen abhängig von der Berechtigung ebenfalls auf einfache Art ausführen. Beim Ändern oder Erweitern des Basisdateiabschnitts bzw. des Vorzugsdateiabschnitts wird die Syntax geändert oder erweitert.

Bei einer Weiterbildung sind der Basisdateiabschnitt und der Vorzugsdateiabschnitt in verschiedenen Dateien gespeichert, nämlich in einer Basisdatei und in einer Vorzugsdatei. Im Folgenden bezieht sich Basisdatei bzw. Vorzugsdatei sowohl auf eine Datei als auch auf einen Dateiabschnitt.

Bei einer Weiterbildung des erfindungsgemäßen Verfahrens sind für die Vorzugsberechtigungsstufe alle Anweisungen der Basisberechtigungsstufe und mindestens eine zusätzliche Anweisung festgelegt. Alternativ oder kumulativ ist für die Vorzugsberechtigungsstufe eine erweiterte Syntax im Vergleich zu der Syntax der Basisberechtigungsstufe festgelegt. Die für die Vorzugsberechtigungsstufe erlaubten Anweisungen bilden damit einer Obermenge, welche die Anweisungen der Basisberechtigungsstufe enthält. Durch diese Maßnahme ist es möglich, zur Ausführung der Anweisungen für die Basisberechtigungsstufe und die Vorzugsberechtigungsstufe dasselbe Programm zu nutzen. Es ist also nicht erforderlich, für jede Berechtigungsstufe ein anderes Programm einzusetzen. Dadurch verringert sich der Aufwand für das Erstellen, Dokumentieren und Pflegen der Programme zum Ausführen der Anweisungen erheblich.

Bei einer nächsten Weiterbildung des erfindungsgemäßen Verfahrens wird die Berechtigungsstufe ermittelt, wenn ein Nutzer eine Anweisungsdatei mit Anweisungen zu der Datenverarbeitungsanlage überträgt. Abhängig von der Berechtigungsstufe für diesen Nutzer werden mit Hilfe der Basisdatei oder mit Hilfe der Vorzugsdatei die in der Anweisungsdatei enthaltenen Anweisungen geprüft. Die Anweisungsdatei wird für eine spätere Ausführung nur dann gespeichert, wenn sie nur für die ermittelte Berechtigungsstufe geltende Anweisungen enthält. Andernfalls wird die Anweisungsdatei nicht gespeichert und kann somit später auch nicht ausgeführt werden. Die Prüfung der Anweisungsdatei wird also zu einem sehr frühen Zeitpunkt ausgeführt. Dieser Zeitpunkt liegt vor dem Zeitpunkt, an dem die Anweisungen der Anweisungsdatei ausgeführt werden, z.B. mehrere Minuten, mehrere Stunden oder mehrere Tage. Anweisungsdateien, die die Sicherheit der Datenverarbeitungsanlage gefährden, werden für eine spätere Ausführung nicht gespeichert. Ein Ausführen solcher Dateien ist damit nicht möglich.

Die Berechtigungsstufe des Anwenders lässt sich kumulativ oder alternativ zur Prüfung vor dem Speichern auch vor dem Bearbeiten einer Anweisungsdatei ermitteln. Abhängig von der Berechtigungsstufe für das Bearbeiten der Anwendungsdatei wird die Basisdatei oder die Vorzugsdatei zur Bearbeitung der Anweisungsdatei genutzt. Bei einer kumulativen Ermittlung der Berechtigungsstufe entsteht eine doppelte Sicherheit.

Bei einer anderen Weiterbildung des erfindungsgemäßen Verfahrens enthalten die Basisdatei und die Vorzugsdatei die Syntax von Anweisungen in einer Auszeichnungssprache. Mit Hilfe der Auszeichnungssprache werden Inhalte von Zeichenketten beschrieben. Auszeichnungssprachen sind gleichermaßen von Datenverarbeitungsanlagen und von Bedienpersonen lesbar. So wird die Auszeichnungssprache SGML, siehe Standard ISO 8879:1986 Information Processing - Text and Office Systems - Standard Graphik Markup Language (SGML), die Sprache XML Extended Markup Language), siehe REC-xml-19980210 des W3C (World Wide Web Consortium), die Sprache HTML 4.0 oder eine auf einer dieser Sprachen aufbauende Sprache genutzt. Insbesondere die Sprachen XML und HTML sind Sprachen, die von einem breiten Nutzerkreis beherrscht werden. Bei der Weiterbildung enthält die Anweisungsdatei Anweisungen in der Auszeichnungssprache, z.B. Anweisungen in XML. Auszeichnungssprachen benutzten in der Regel Wiederholungen derselben Schlüsselwörter, um zwischen den Schlüsselwörtern stehenden Text auszuzeichnen, d.h. dessen Inhalt zu beschreiben. Die Schlüsselworte werden auch als Tags bezeichnet.

Auszeichnungssprachen lassen sich zum Festlegen von Anweisungen nutzen, die eine Sprachübertragung in einem durchschaltevermittelten Telefonnetz und/oder in einem paketvermittelten Datenübertragungsnetz steuern. Deshalb enthält die Basisdatei und die Vorzugsdatei bei einer nächsten Weiterbildung solche Anweisungen und/oder die Syntax von solchen Anweisungen. Den Nutzern wird es so ermöglicht, mit einer von ihnen bereits beherrschten leicht zu erlernenden Auszeichnungssprache Leistungsmerkmale für eine Echtzeit-Sprachübertragung, d.h. z.B. mit Bearbeitungszeiten kleiner als 250 ms von der Aufnahme der Sprachdaten auf der Senderseite bis zu ihrer Ausgabe auf der Empfängerseite, auf einfache Art selbst zu programmieren. Abhängig von der Berechtigungsstufe können verschiedene Anweisungen genutzt werden. Für die Basisberechtigungsstufe ist beispielsweise eine Rufumleitung bei bestimmten Ereignissen oder das Einspielen bestimmter Ansagen zugelassen. In der Vorzugsberechtigungsstufe können darüber hinaus auch Gebühren beeinflusst werden. Als Sprache der Anweisungen wird bei einer Ausgestaltung die oben erwähnte Sprache CPL (Call Processing Language) eingesetzt. Damit wird eine Sprache genutzt, die auf einer Auszeichnungssprache basiert und besonders für die Programmierung von Leistungsmerkmalen in einem Telefonnetz oder von Leistungsmerkmalen für die Internettelefonie geeignet ist. Bei der Weiterbildung enthält die Anweisungsdatei Anweisungen zum Steuern der Sprachübertragung.

Bei einer nächsten Weiterbildung wird zur Bearbeitung der Anweisungsdatei unabhängig von der Berechtigungsstufe dasselbe Parser-Programm zum Zerlegen der Anweisungsdatei in einzelne Anweisungen eingesetzt. Kumulativ oder alternativ wird zur Bearbeitung der Anweisungsdatei auch dasselbe Anwendungsprogramm zum Ausführen der Anweisungen genutzt. Somit müssen trotz verschiedener Berechtigungsstufen nur zwei Programme erstellt werden, mit deren Hilfe die Anweisungen der Nutzer verschiedener Berechtigungsstufen ausgeführt werden.

Die Erfindung betrifft außerdem eine Datenverarbeitungsanlage und ein Programm, die das Ausführen des erfindungsgemäßen Verfahrens oder einer seiner Weiterbildungen ermöglichen. Damit gelten die oben genannten technischen Wirkungen auch für die Datenverarbeitungsanlage und das Programm.

Im Folgenden werden Ausführungsbeispiele der Erfindung an Hand der beiliegenden Zeichnungen erläutert. Darin zeigen:
- Figur 1: Funktionseinheiten einer Datenverarbeitungsanlage, für deren Nutzer verschiedene Berechtigungsstufen festgelegt sind,
- Figur 2: den Zusammenhang der Anweisungen zweier verschiedener Berechtigungsstufen,
- Figuren 3A und 3B: Verfahrensschritte beim Empfangen einer XML-Datei, und
- Figur 4: die Darstellung eines Telefondienstes.

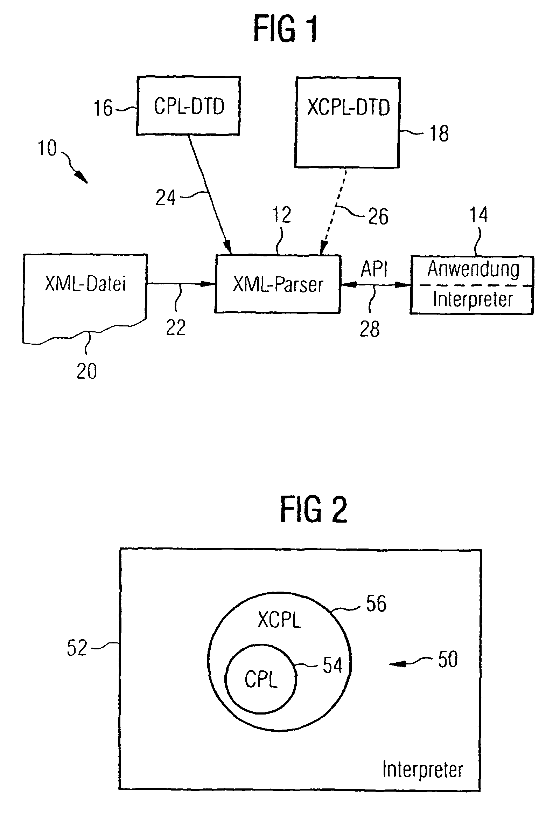

Figur 1 zeigt Funktionseinheiten einer Datenverarbeitungsanlage 10, für deren Nutzer verschiedene Berechtigungsstufen festgelegt sind. Die Datenverarbeitungsanlage 10 enthält eine nicht dargestellte Speichereinheit und einen nicht dargestellten Prozessor zum Ausführen von Programmbefehlen. In der Speichereinheit der Datenverarbeitungsanlage 10 sind ein Parser-Programm 12, ein Anwendungsprogramm 14, eine Basisdefinitionsdatei 16, eine Vorzugsdefinitionsdatei 18 und eine XML-Datei 20 gespeichert.

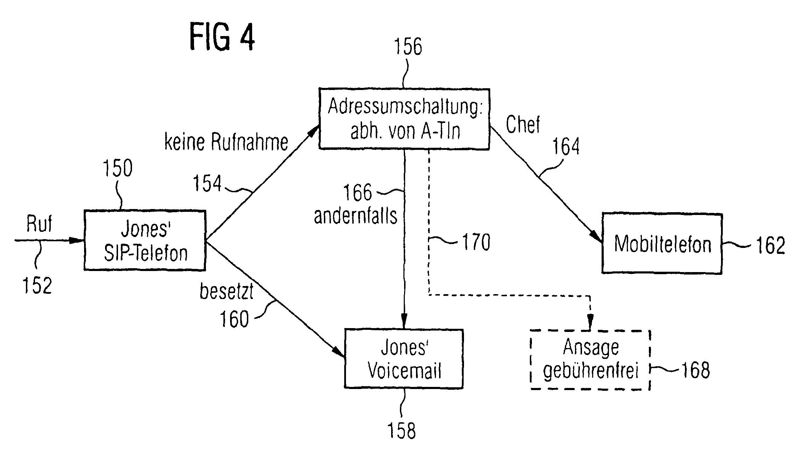

Das Parser-Programm 12 ist in der Lage, in der XML-Datei 20 enthaltene XML-Anweisungen voneinander zu trennen, siehe Pfeil 22. Dabei wird abhängig von der Berechtigungsstufe eines Nutzers, der die Datei 20 erzeugt hat, entweder die Basisdefinitionsdatei 16 oder die Vorzugsdefinitionsdatei 18 genutzt, siehe Pfeil 24 bzw. 26. Die Basisdefinitionsdatei 16 ist eine sogenannte DTD-Datei (Document Type Definition), wie sie für die Sprache XML festgelegt worden ist. Die Basisdefinitionsdatei 16 enthält die Syntax der Sprache CPL (Call Processing Language). Die Vorzugsdefinitionsdatei 18 ist ebenfalls eine DTD-Datei, enthält jedoch die Syntax einer im Vergleich zur Sprache CPL erweiterten Sprache XCPL (Extended CPL). Ein Beispiel für eine solche Erweiterung wird unten an Hand der Figur 4 erläutert.

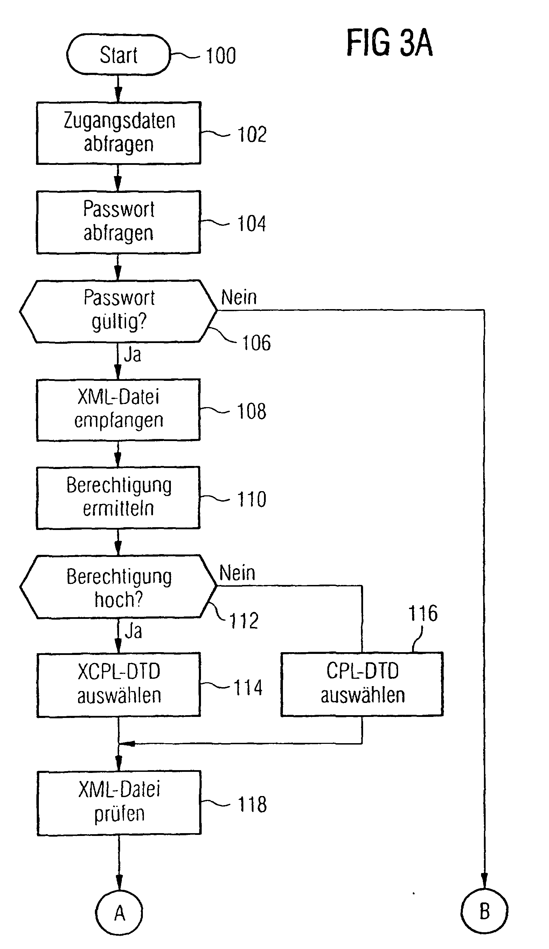

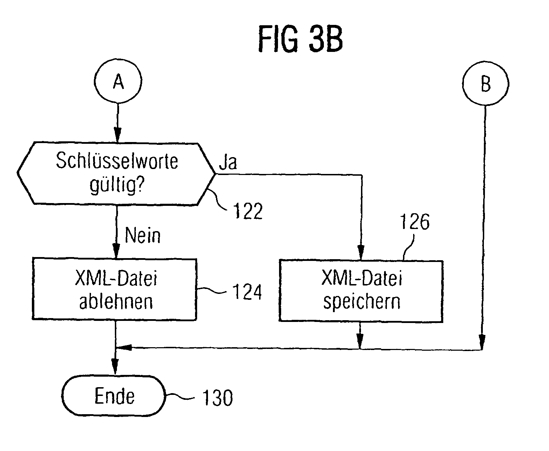

Außerdem ist das Parser-Programm 12 in der Lage, die Syntax der XML-Datei 20 unter Verwendung der Basisdefinitionsdatei 16 bzw. unter Verwendung der Vorzugsdefinitionsdatei 18 zu überprüfen, siehe ebenfalls Pfeile 24 und 26. Die dabei ausgeführten Schritte werden unten an Hand der Figuren 3A und 3B näher erläutert.

Das Parser-Programm 12 übergibt im Anweisungsausführungsmodus die einzelnen Anweisungen an das Anwendungsprogramm 14, siehe Pfeil 28. Die Schnittstelle zwischen dem Parser-Programm 12 und den Anwendungsprogramm 14 ist von dem Hersteller des Parser-Programms 12 vorgegeben und wird als API (Application Programming Interface) bezeichnet. Mit Hilfe des Anwendungsprogramms 14 lassen sich abhängig von den Anweisungen Funktionen einer Vermittlungsstelle des durchschaltevermittelten Netzes oder Funktionen von Netzzugangseinheiten in einem paketvermittelten Netz steuern, z.B. Funktionen einer Vermittlungsstelle EWSD (elektronisch gesteuertes digitales Wählsystem) der Firma SIEMENS AG. Als paketvermitteltes Netz wird das Internet genutzt. Das Anwendungsprogramm 14 enthält ein Interpreterprogramm zum Interpretieren der einzelnen Anweisungen und zum Ausführen der für die Anweisungen festgelegten Funktionen.

Figur 2 zeigt ein Mengendiagramm 50 der vom Interpreter 52 des Anwendungsprogramms 14 ausführbaren Anweisungen. Die Anweisungen der Sprache CPL sind für Benutzer mit einer Basisberechtigung ausführbar, siehe Kreis 54. Benutzer mit einer Vorzugsberechtigungsstufe können die Anweisungen der Sprache CPL und zusätzlich noch weitere Anweisungen ausführen, mit deren Hilfe sie erweiterte Zugriffsrechte nutzen können, z.B. auf Speichereinheiten, siehe Kreis 56. Somit bilden die Anweisungen der Sprache XCPL eine Obermenge, in der die Anweisungen der Sprache CPL als Untermenge enthalten sind.

Die Figuren 3A und 3B zeigen Verfahrensschritte, die beim Empfang der XML-Datei 20 in der Datenverarbeitungsanlage 10 ausgeführt werden, siehe Figur 1. Das Verfahren beginnt in einem Verfahrensschritt 100, nach dem die an Hand der Figur 1 erläuterten Dateien bzw. Programme ausgenommen der Datei 20 in der Datenverarbeitungsanlage 10 gespeichert worden sind. Außerdem wurden Berechtigungsstufen für verschiedene Benutzergruppen festgelegt. Für eine Basisberechtigungsstufe gilt die Basisdefinitionsdatei 16. Für eine Vorzugsberechtigungsstufe gilt die Vorzugsdefinitionsdatei 18, die einen im Vergleich zur Basisberechtigungsstufe erweiterten Satz von Anweisungen zulässt.

In einem dem Verfahrensschritt 100 folgenden Verfahrensschritt 102 werden die Zugangsdaten des Nutzer abgefragt, der die Datei 20 übertragen möchte. Zu den Zugangsdaten gehört beispielsweise ein Benutzername.

In einem Verfahrensschritt 104 wird ein Passwort abgefragt, dass von den Nutzern der Datenverarbeitungsanlage 10 vertraulich behandelt wird. Mit Hilfe des empfangenen Passworts wird geprüft, ob dieses Passwort für den im Verfahrensschritt 102 empfangenen Benutzernamen gültig ist, siehe Verfahrensschritt 106. Ist das Passwort gültig, so wird in einem Verfahrensschritt 108 die Datei 20 übertragen und im Arbeitsspeicher der Datenverarbeitungsanlage 10 zwischengespeichert. In einem nächsten Verfahrensschritt 110 wird die Berechtigungsstufe für den Nutzer ermittelt, von dem die Datei 20 kam, d.h. die Basisberechtigungsstufe oder die Vorzugsberechtigungsstufe.

In einem Verfahrensschritt 112 wird geprüft, ob der Nutzer die Vorzugsberechtigungsstufe hat. Ist dies der Fall, so wird die Vorzugsdefinitionsdatei 18 für einen folgenden Parserdurchlauf ausgewählt, siehe Verfahrensschritt 114. Ist dagegen die im Verfahrensschritt 110 ermittelte Berechtigungsstufe die Basisberechtigungsstufe, so wird in einem dem Verfahrensschritt 112 unmittelbar folgenden Verfahrensschritt 116 die Basisdefinitionsdatei 16 für den folgenden Parserdurchlauf ausgewählt.

In einem Verfahrensschritt 118 wird die Datei 20 mit Hilfe des Parser-Programms 12 unter Verwendung der im Verfahrensschritt 114 bzw. 116 ausgewählten Definitionsdatei geparst. Eine Ausführung der in der Datei 20 enthaltenen Anweisungen unterbleibt vorerst.

In einem Verfahrensschritt 122 wird geprüft, ob alle in der Datei 20 enthaltenen Schlüsselworte gemäß der Syntax der im Verfahrensschritt 114 bzw. im Verfahrensschritt 116 ausgewahlten Definitionsdatei zulässig sind. Gibt es ungültige Schlüsselworte, so wird die Datei 20 in einem Verfahrensschritt 124 abgelehnt. Beispielsweise werden die Daten der Datei 20 in der Datenverarbeitungsanlage 10 mit anderen Daten überschrieben. Sind dagegen alle Schlüsselworte gültig, so muss davon ausgegangen werden, dass der Nutzer der Datei 20 nur Anweisungen benutzt, die für seine Berechtigungsstufe zulässig sind. Deshalb wird die Datei 20 in einem Verfahrensschritt 126 für eine spätere Bearbeitung in einem nicht flüchtigen Speicher der Datenverarbeitungsanlage 10 gespeichert. Alternativ oder kumulativ wird die Datei 20 sofort ausgeführt bzw. verarbeitet.

Unmittelbar nach dem Verfahrensschritt 124 bzw. nach dem Verfahrensschritt 126 wird das Verfahren in einem Verfahrensschritt 130 beendet. Der Verfahrensschritt 130 wird auch unmittelbar nach dem Verfahrensschritt 106 ausgeführt, wenn festgestellt wird, dass das eingegebene Passwort ungültig ist.

Figur 4 zeigt die Darstellung eines Telefondienstes. Ein Nutzer bzw. Teilnehmer mit dem Namen Jones programmiert diesen Dienst unter Verwendung der Sprache XML und speziell der Sprache CPL. Dem Nutzer bzw. Teilnehmer Jones gehört ein SIP-Telefon 150, das gemäß SIP-Standard (Session Initiation Protocol) arbeitet. Dieses Protokoll wurde von der IETF als Standard für IP-Telefonie (Internet Protocol) im RFC 2543 (Request for Comment) festgelegt. Bei einem für das Telefon 150 an einer Vermittlungsstelle oder an einer Netzzugangseinheit ankommenden Ruf 152 sollen abhängig vom Belegungszustand des Telefons 150 verschiedene Funktionen aktiviert werden. Meldet sich Jones nicht am Telefon 150, siehe Pfeil 154, so soll eine Adressumschaltungsfunktion 156 genutzt werden. Ist dagegen das Telefon 150 besetzt, weil Jones gerade telefoniert, so soll der ankommende Ruf 152 zu einem Anrufbeantworter 158 umgeleitet werden, siehe Pfeil 160.

Beim Ausführen der Adressumschaltungsfunktion 156 soll die Herkunft des ankommenden Rufes 152 berücksichtigt werden. Ist der rufende Teilnehmer, d.h. der A-Teilnehmer, der Vorgesetzte von Jones, so soll der ankommende Ruf an Jones Mobiltelefon 162 umgeleitet werden, siehe Pfeil 164. Kommt der Ruf 152 dagegen nicht von dem Vorgesetzten, so soll der ankommende Ruf zum Anrufbeantworter 158 umgeleitet werden, siehe Pfeil 166.

Der CPL-Quelltext zum Programmieren dieser Funktion lautet:

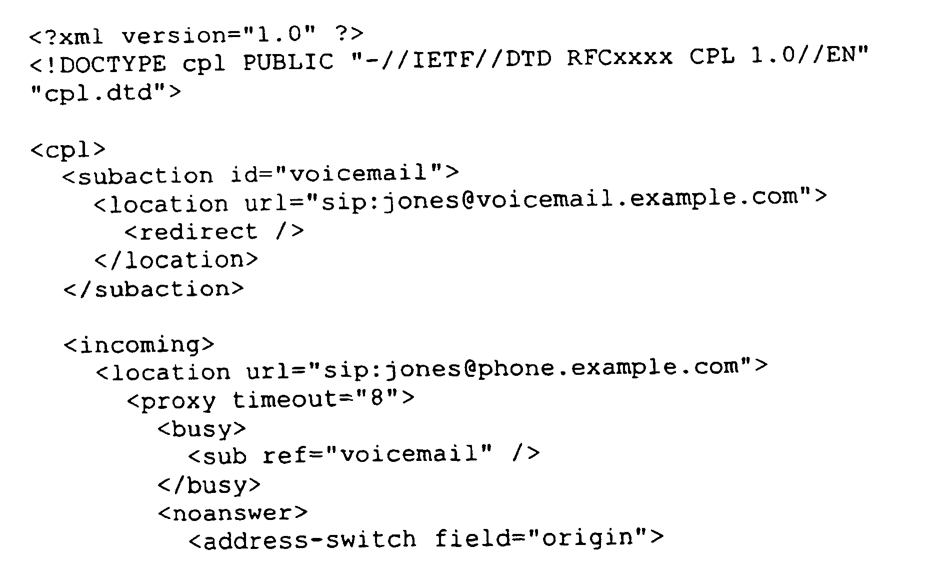

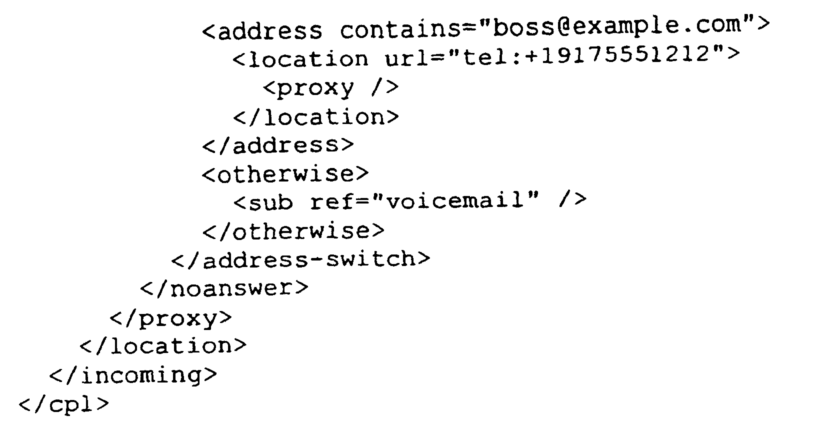

Dieser Quelltext ist dem Entwurf (work in progress) "CPL: Language for User Control of Internet Telefony Services", von Lennox/Schulzrinne, zu entnehmen. Dieser Entwurf ist auf der WEB-Seite mit der Adresse www.ietf.org unter dem Namen "Draft-ietf-iptel-cpl-02.txt" abrufbar. Insbesondere wird auf die Figur 24 des Entwurfs und die zugehörigen Erläuterungen verwiesen.

Der Quelltext enthält Befehle, die in der Basisdefinitionsdatei 16 enthalten sind. Der Inhalt der Basisdefinitionsdatei 16 ist ebenfalls in dem Entwurf für die Sprache CPL an der angegebenen Adresse abrufbar.

Ein Benutzer, für den die Vorzugsberechtigungsstufe festgelegt worden ist, darf dagegen Anweisungen benutzen, die in der Vorzugsdefinitionsdatei 18 festgelegt worden sind. Die Syntax der Sprache CPL wird deshalb beispielsweise folgendermaßen erweitert:

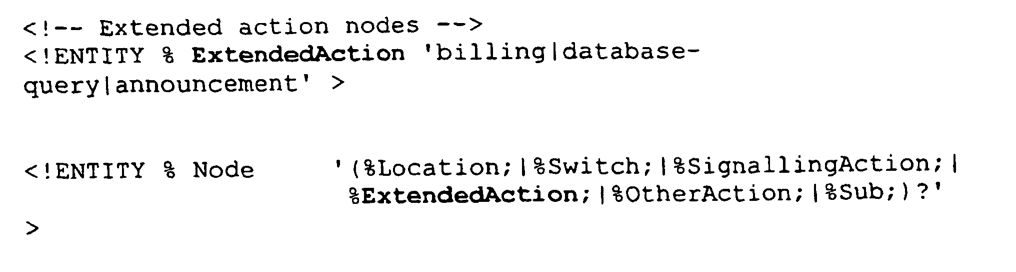

Für die erweiterte Sprache XCPL wurde ein zusätzliches Syntaxelement "ExtendedAction" festgelegt, das die Gebührenabrechnung (Billing), eine Datenbankabfrage (Database-query) oder eine Ansage (Announcement) betreffen kann. Die Syntax für das Syntaxelement "Node" wurde erweitert. Es besteht nun die Möglichkeit, auch auf das Syntaxelement "ExtendedAction" Bezug zu nehmen. Außerdem wurde die Syntax wie folgt ergänzt:

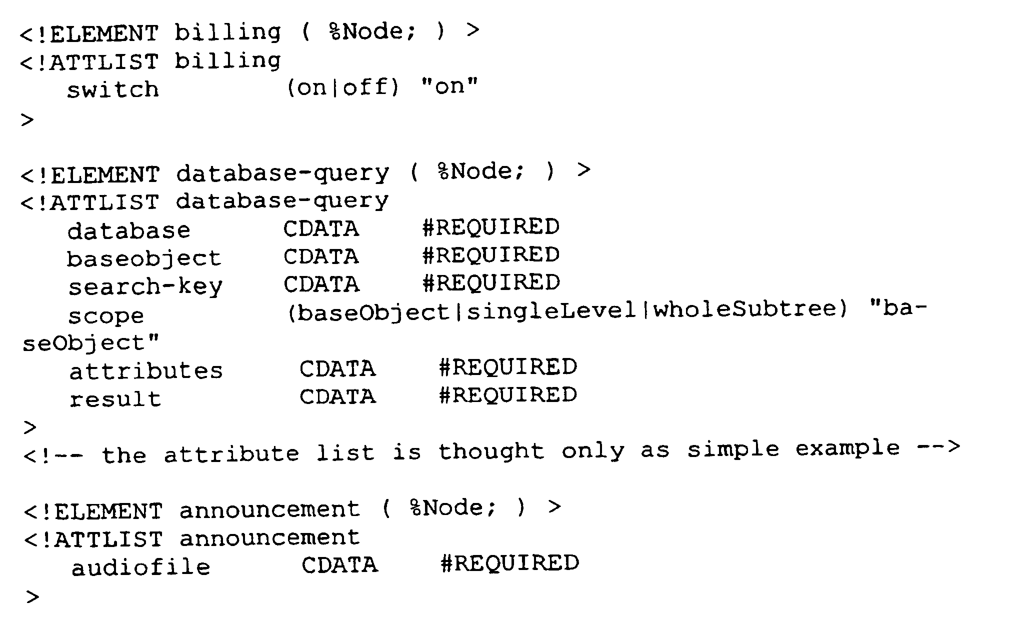

Somit lässt sich die Gebührenabrechnung ein- bzw. ausschalten. Bei einer Datenbankabfrage sind ein Name der Datenbank, ein Bezugsobjekt, ein Suchschlüssel, und weitere Parameter anzugeben. Die Ansage ist als Audiofile festgelegt.

Im übrigen stimmt die Syntax der Vorzugsdefinitionsdatei 18 mit der Syntax Basisdefinitionsdatei 16 überein.

Der Nutzer mit der Vorzugsberechtigungsstufe möchte beispielsweise, dass die Adressumschaltungsfunktion 156 etwas modifiziert arbeitet. Kommt der Ruf 152 vom Vorgesetzten, so soll weiterhin auf das Mobiltelefon 162 umgeleitet werden, siehe Pfeil 164. Kommt dagegen der Ruf von einem anderen Teilnehmer, so soll eine gebührenfreie Ansage 168 für den rufenden Teilnehmer hörbar sein, siehe Pfeil 170. Damit ist die durch den Pfeil 166 angedeutete Funktion nicht erforderlich. Der XML-Text der Datei 20 für den Nutzer bzw. Teilnehmer mit der Vorzugsberechtigungsstufe lautet:

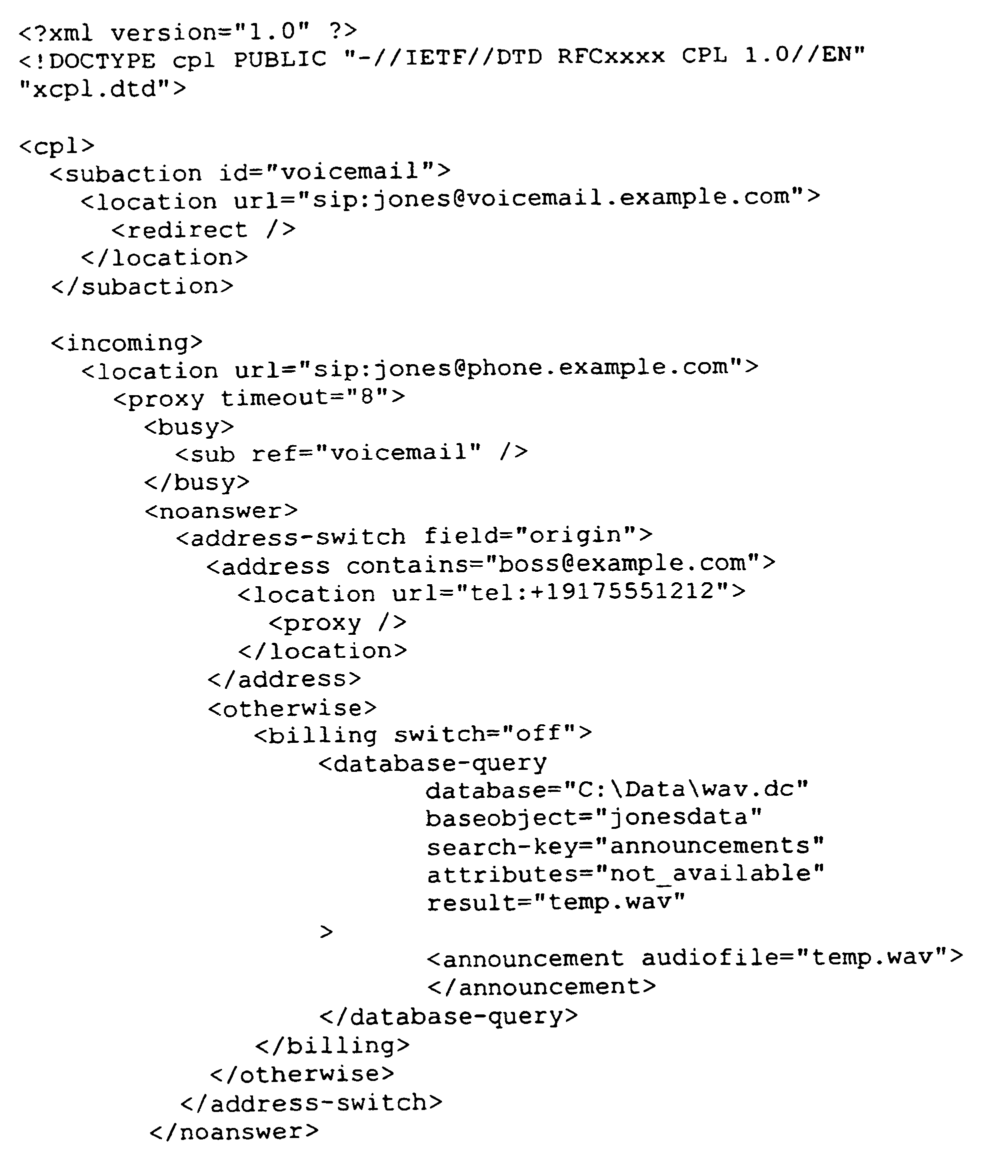

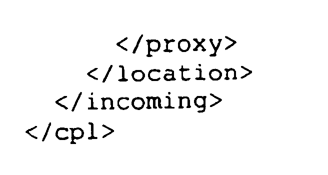

Dieser Quelltext stimmt in großen Teilen mit dem im Entwurf zur Sprache CPL, Figur 24, dargestellten und oben erläuterten Quelltext überein. Unterschiede gibt es jedoch innerhalb des Tags <otherwise> ... </otherwise>. Innerhalb dieses Tags wird die Gebührenabrechnung ausgeschaltet. Anschließend wird mit Hilfe der Anweisung "Database-query" eine Datenbankabfrage gestellt, um eine Sprachdatei "temp.wav" zu ermitteln. Danach wird diese Datei mit Hilfe der Anweisung "Announcement" abgespielt.

## Patentansprüche

1. Verfahren zum Nutzen einer Datenverarbeitungsanlage (10) abhängig von einer Berechtigung,
bei dem für mindestens einen Basisnutzer einer Datenverarbeitungsanlage (10) eine Basisberechtigungsstufe bezüglich des Ausführens bestimmter Anweisungen mit Hilfe der Datenverarbeitungsanlage (10) festgelegt wird,
bei dem für mindestens einen Vorzugsnutzer der Datenverarbeitungsanlage (10) eine Vorzugsberechtigungsstufe festgelegt wird, die das Ausführen von Anweisungen mit weitergehenden Zugriffsrechten im Vergleich zu den Anweisungen der Basisberechtigungsstufe erlaubt,
bei dem die Syntax von Anweisungen für die Basisberechtigungsstufe in einem Basisdateiabschnitt (16) vermerkt sind,
bei dem die Syntax von Anweisungen für die Vorzugsberechtigungsstufe in einem Vorzugsdateiabschnitt (20) vermerkt sind,
bei dem vor dem Ausführen der Anweisungen eines Nutzers dessen Berechtigungsstufe ermittelt wird,
und bei dem abhängig von der ermittelten Berechtigungsstufe der Basisdateiabschnitt (16) oder der Vorzugsdateiabschnitt (20) zum Festlegen der Anweisungen herangezogen wird, die der Nutzer ausführen darf.

2. Verfahren nach Anspruch 1, **dadurch gekennzeichnet, dass** der Basisdateiabschnitt in einer Basisdatei (16) und der Vorzugsdateiabschnitt in einer Vorzugsdatei (18) gespeichert wird, die von der Basisdatei verschieden ist,
und/oder, dass der Basisdateiabschnitt und/oder der Vorzugsdateiabschnitt (18) selbst kein durch einen Prozessor ausführbares Programm oder einen durch den Prozessor ausführbaren Programmabschnitt festlegt.

3. Verfahren nach Anspruch 1 oder 2, **dadurch gekennzeichnet, dass** für die Vorzugsberechtigungsstufe die Anweisungen der Basisberechtigungsstufe und mindestens eine zusätzliche Anweisung und/oder eine erweiterte Syntax im Vergleich zur Syntax der Basisberechtigungsstufe festgelegt sind.

4. Verfahren nach einem der vorhergehenden Ansprüche, **dadurch gekennzeichnet , dass** die Berechtigungsstufe ermittelt wird, wenn ein Nutzer eine Anweisungsdatei (20) mit Anweisungen zu der Datenverarbeitungsanlage (10) überträgt,
dass abhängig von der Berechtigungsstufe mit Hilfe des Basisdateiabschnitts (16) oder mit Hilfe des Vorzugsdateiabschnitts (18) die in der Anweisungsdatei (20) enthaltenen Anweisungen geprüft werden,
und dass die Anweisungsdatei (20) für eine spätere Ausführung gespeichert wird, wenn sie nur für die ermittelte Berechtigungsstufe geltende Anweisungen enthält.

5. Verfahren nach einem der vorhergehenden Ansprüche, **dadurch gekennzeichnet , dass** vor dem Bearbeiten einer Anweisungsdatei (20) die Berechtigungsstufe des Nutzers ermittelt wird,
dass abhängig von der Berechtigungsstufe für das Bearbeiten der Anweisungsdatei der Basisdateiabschnitt (16) oder der Vorzugsdateiabschnitt (18) zur Bearbeitung der Anweisungsdatei (20) genutzt wird.

6. Verfahren nach einem der vorhergehenden Ansprüche, **dadurch gekennzeichnet , dass** der Basisdateiabschnitt (16) und der Vorzugsdateiabschnitt (18) Anweisungen und/oder die Syntax von Anweisungen einer Auszeichnungssprache enthalten, mit deren Hilfe Inhalte von Zeichenketten beschrieben werden,
insbesondere Anweisungen der Sprache SGML, der Sprache XML, der Sprache HTML 4.0, oder einer auf einer dieser Sprachen aufbauenden Sprache,
und dass die Anweisungsdatei (20) Anweisungen in der Auszeichnungssprache enthält.

7. Verfahren nach einem der vorhergehenden Ansprüche, **dadurch gekennzeichnet , dass** der Basisdateiabschnitt (16) und der Vorzugsdateiabschnitt (18) Anweisungen und/oder die Syntax von Anweisungen zum Steuern einer Sprachübertragung über ein durchschaltevermitteltes Telefonnetz und/oder ein paketvermitteltes Datenübertragungsnetz festlegen,
vorzugsweise die Syntax von Anweisungen der Sprache CPL oder einer auf dieser Sprache aufbauenden Sprache,
und dass die Anweisungsdatei (20) Anweisungen zum Steuern der Sprachübertragung festlegt.

8. Verfahren nach einem der vorhergehenden Ansprüche, **dadurch gekennzeichnet , dass** zur Bearbeitung der Anweisungsdatei (20) unabhängig von der Berechtigungsstufe dasselbe Parser-Programm (12) zum Zerlegen der Anweisungsdatei in einzelne Anweisungen und/oder dasselbe Anwendungsprogramm (14) zum Ausführen der Anweisungen genutzt wird.

9. Datenverarbeitungsanlage (10), **dadurch gekennzeichnet, dass** die Datenverarbeitungsanlage (10) so aufgebaut ist, dass bei ihrem Betrieb ein Verfahren nach einem der vorhergehenden Ansprüche ausgeführt wird.

10. Programm mit einer Befehlsfolge, bei deren Ausführung durch einen Prozessor ein Verfahren nach einem der Ansprüche 1 bis 8 ausgeführt wird.

## Claims

1. Method for using a data processing system (10) as a function of an authorization,
in which a basic authorization level relating to the execution of specific instructions using the data processing system (10) is defined for at least one basic user of a data processing system (10),
in which a priority authorization level, which permits the execution of instructions with wider ranging access rights in comparison to the instructions of the basic authorization level, is defined for at least one priority user of the data processing system (10),
in which the syntax of instructions for the basic authorization level is noted in a basic file section (16), in which the syntax of instructions for the priority authorization level is noted in a priority file section (20), in which the authorization level of a user is determined before the execution of the instructions of said user,
and in which the basic file section (16) or the priority file section (20) is used, as a function of the authorization level determined, to define the instructions which the user is allowed to execute.

2. Method according to Claim 1, **characterized in that** the basic file section is stored in a basic file (16) and the preferred file section is stored in a priority file (18) which differs from the basic file,
and/or **in that** the basic file section and/or the priority file section (18) itself does not define a program which can be executed by a processor or a program section which can be executed by the processor.

3. Method according to Claim 1 or 2, **characterized in that** the instructions of the basic authorization level and at least one additional instruction and/or an expanded syntax in comparison with the syntax of the basic authorization level are defined for the priority authorization level.

4. Method according to one of the preceding claims, **characterized in that** the authorization level is determined if a user transmits an instruction file (20) with instructions to the data processing system (10),
**in that** the instructions contained in the instruction file (20) are checked as a function of the authorization level using the basic file section (16) or using the priority file section (18),
and **in that** the instruction file (20) is stored for a later execution if it contains only instructions which are valid for the authorization level which is determined.

5. Method according to one of the preceding claims, **characterized in that** the authorization level of the user is determined before the processing of an instruction file (20),
**in that** the basic file section (16) or the priority file section (18) is used to process the instruction file (20), as a function of the authorization level for the processing of the instruction file.

6. Method according to one of the preceding claims, **characterized in that** the basic file section (16) and the priority file section (18) contain instructions and/or the syntax of instructions of a markup language which is used to describe contents of character chains,
in particular instructions of the language SGML, the language XML, the language HTML 4.0 or a language based on one of these languages,
and **in that** the instruction file (20) contains instructions in the markup language.

7. Method according to one of the preceding claims, **characterized in that** the basic file section (16) and the priority file section (18) define instructions and/or the syntax of instructions for controlling a voice transmission via a circuit-switched telephone network and/or a packet-switched data transmission network,
preferably the syntax of instructions of the language CPL or a language based on this language,
and **in that** the instruction file (20) defines instructions for controlling the voice transmission.

8. Method according to one of the preceding claims, **characterized in that**, for processing the instruction file (20), the same parser program (12) is used for decomposing the instruction file into individual instructions and/or the same application program (14) is used for executing the instructions, irrespective of the authorization level.

9. Data processing system (10), **characterized in that** the data processing system (10) is constructed in such a way that during operation a method according to one of the preceding claims is executed.

10. Program having a command sequence during whose execution a method according to one of Claims 1 to 8 is executed by a processor.

## Revendications

1. Procédé pour utiliser une installation de traitement de données (10) en fonction d'une autorisation, dans lequel il est procédé à la détermination, pour au moins un utilisateur de base d'une installation de traitement de données (10), à l'aide de ladite installation de traitement de données (10), d'un niveau d'autorisation de base relativement à l'exécution d'instructions déterminées;
pour au moins un utilisateur privilégié de l'installation de traitement de données (10), il est procédé à la détermination d'un niveau d'autorisation privilégiée qui permet l'exécution d'instructions avec de plus amples droits d'accès en comparaison avec les instructions du niveau d'autorisation de base;
la syntaxe d'instructions pour le niveau d'autorisation de base est notée dans une section de fichier de base (16);
la syntaxe d'instructions pour le niveau d'autorisation privilégiée est notée dans une section de fichier privilégié (20),
avant l'exécution des instructions d'un utilisateur, il est procédé à la détermination du niveau d'autorisation de celui-ci et
en fonction du niveau d'autorisation qui a été déterminé, il est fait appel à la section de fichier de base (16) ou à la section de fichier privilégié (20) pour déterminer les instructions que l'utilisateur peut exécuter.

2. Procédé selon la revendication 1, **caractérisé en ce qu'**il est procédé à la mise en mémoire de la section de fichier de base dans un fichier de base (16) et de la section de fichier privilégié dans un fichier privilégié (18) qui est différent du fichier de base
et/ou **en ce que** la section de fichier de base et/ou la section de fichier privilégié (18) ne déterminent pas elles-mêmes un programme exécutable par un processeur ou une section de programme exécutable par le processeur.

3. Procédé selon la revendication 1 ou 2, **caractérisé en ce que** sont déterminées, pour le niveau d'autorisation privilégiée, les instructions du niveau d'autorisation de base et au moins une instruction supplémentaire et/ou une syntaxe élargie en comparaison avec la syntaxe du niveau d'autorisation de base.

4. Procédé selon l'une des revendications précédentes, **caractérisé en ce qu'**il est procédé à la détermination du niveau d'autorisation lorsqu'un utilisateur transmet un fichier d'instructions (20) avec des instructions à l'installation de traitement de données (10),
**en ce qu'**il est procédé au contrôle des instructions contenues dans le fichier d'instructions (20) en fonction du niveau d'autorisation à l'aide de la section de fichier de base (16) ou à l'aide de la section de fichier privilégié (18)
et **en ce qu'**il est procédé à la mise en mémoire du fichier d'instructions (20) en vue d'une exécution ultérieure s'il contient des instructions valables uniquement pour le niveau d'autorisation déterminé.

5. Procédé selon l'une des revendications précédentes, **caractérisé en ce qu'**il est procédé à la détermination du niveau d'autorisation de l'utilisateur avant le traitement d'un fichier d'instructions (20) et
**en ce que**, en fonction du niveau d'autorisation pour le traitement du fichier d'instructions, on utilise la section de fichier de base (16) ou la section de fichier privilégié (18) pour le traitement du fichier d'instructions (20).

6. Procédé selon l'une des revendications précédentes, **caractérisé en ce que** la section de fichier de base (16) et la section de fichier privilégié (18) contiennent des instructions et/ou la syntaxe d'instructions d'un langage de balisage à l'aide duquel sont décrits des contenus de chaînes de signes,
en particulier des instructions du langage SGML, du langage XML, du langage HTML 4.0 ou d'un langage se basant sur l'un de ces langages
et **en ce que** le fichier d'instructions (20) contient des instructions dans le langage de balisage.

7. Procédé selon l'une des revendications précédentes, **caractérisé en ce que** la section de fichier de base (16) et la section de fichier privilégié (18) déterminent des instructions et/ou la syntaxe d'instructions pour commander une transmission vocale par l'intermédiaire d'un réseau téléphonique à commutation de circuits et/ou un réseau de transmission de données à commutation de paquets,
de préférence la syntaxe d'instructions du langage CPL ou d'un langage qui se base sur ce langage,
et **en ce que** le fichier d'instructions (20) détermine des instructions de commande de la transmission vocale.

8. Procédé selon l'une des revendications précédentes, **caractérisé en ce qu'**on utilise, pour traiter le fichier d'instructions (20), indépendamment du niveau d'autorisation, le même programme de parsing (12) pour décomposer le fichier d'instructions en instructions individuelles et/ou le même programme d'application (14) pour exécuter les instructions.

9. Installation de traitement de données (10), **caractérisée en ce que** l'installation de traitement de données (10) est construite de manière telle que, lors de son fonctionnement, on exécute un procédé selon l'une des revendications précédentes.

10. Programme comprenant une suite de commandes lors de l'exécution desquelles un procédé selon l'une des revendications 1 à 8 est exécuté par un processeur.
